(19)

Europäisches
Patentamt

European
Patent Office

Office européen
des brevets

(11) **EP 2 273 382 A2**

(12) **EUROPEAN PATENT APPLICATION**

(43) Date of publication:
**12.01.2011 Bulletin 2011/02**

(51) Int Cl.:
*G06F 17/12* [(2006.01)]

(21) Application number: **10168272.2**

(22) Date of filing: **02.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **06.07.2009 US 459596**

(71) Applicant: **Vannucci, James
McDonald PA 15057 (US)**

(72) Inventor: **Vannucci, James
McDonald PA 15057 (US)**

(74) Representative: **Bardehle, Heinz
Bardehle Pagenberg
Galileiplatz 1
81679 München (DE)**

(54) **Device and method for determining signals**

(57) Many signal processing devices require the solution to a system of equations with a Toeplitz, or block Toeplitz, coefficient matrix. This solution can be obtained with increased efficiency by separating the initial system of equations into a number of systems of equations with reduced dimensions. The solution to the initial system of equations is then calculated from the solutions to the systems of equations with reduced dimensions.

*Fig. 1 Device 100*

EP 2 273 382 A2

**Description**

**CROSS-REFERENCE TO RELATED APPLICATIONS**

This application claims Foreign Priority to application US 12/459,596, filed on 06 July, 2009, the entire contents of which are incorporated herein.

**BACKGROUND**

The present invention relates to the field of signal processing. In particular, the present invention concerns a device and methods for determining signals. Many devices, including imaging, sensing, control, communications, and general signal processing devices determine signals for their operation. General signal processing devices include digital filtering devices, linear prediction devices, system identification devices, and speech and image processing devices. The disclosed device can be a component in these signal processing devices.

Communications devices typically input, process and output signals that represent transmitted data, speech or image information. The devices can be used for communications channel estimation, mitigating intersymbol interference, cancellation of echo and noise, channel equalization, and user detection. The devices can use digital forms of the input signals to generate a covariance matrix and a crosscorrelation vector for a system of equations that must be solved to determine signal weights. The signal weights are usually used to determine signals for the operation of the device. The covariance matrix may be Toeplitz, block Toeplitz, or approximately Toeplitz or block Toeplitz. The performance of a communications device is usually directly related to the maximum dimensions of the system of equations, and the speed at which the system of equations can be solved. The larger the dimensions of the system of equations, the more information can be contained in the weight vector. The faster the system of equations can be solved, the greater the possible capacity of the device.

Sensing devices, including radar, ladar and sonar systems, typically collect energy at a sensor array, and processes the signals that have been generated by the collected energy to obtain coefficients that can be used for beamforming and other applications. The signals can represent physical properties of a target including reflectivity, velocity, shape, and position. Obtaining the coefficients can require determining the solution of a system of equations with a Toeplitz or block Toeplitz coefficient matrix if the sensor array has equally spaced elements. The performance of the sensing device is usually related to the maximum dimensions of the system of equations, since the dimensions usually determine the sensor array size and the resolution of the device. The performance of the sensing device also depends on the speed at which the system of equations can be solved. Increasing the solution speed can improve tracking of the target, or determining the position of the target in real time. Larger sensor arrays also result in a much narrower beam for resistance to unwanted signals.

Imaging devices, including synthetic aperture radar, fault inspection devices, LIDAR, geological imaging devices, and medical imaging devices including magnetic resonance imaging (MRI), computed tomography (CT), positron emission tomography (PET), and ultrasound devices, require the solution of a system of equations with a Toeplitz or block Toeplitz coefficient matrix. The solution is a digital signal that represents an image of biological or non-biological materials. The performance of the imaging device is usually related to the maximum dimensions of the system of equations, since the dimensions usually determine the number of sensor elements and the resolution of the device. Device performance is also improved by increasing the speed at which the system of equations can be solved, since this increase can facilitate real time operation.

Control devices include devices for the control of mechanical, biological, chemical and electrical components. These devices typically process signals that represent a wide range of physical quantities, including deformation, position, temperature, and velocity of a controlled object. The signals are used to generate a Toeplitz or block Toeplitz covariance matrix and a known vector in a system of equations that must be solved for signal weights that are required for controlling the controlled object. The performance of the device is usually directly related to the speed at which the system of equations can be solved, since increased speed improves the response time required to control the controlled object.

General signal processing devices input, process, and output signals that represent a wide range of physical quantities including, but not limited to, signals that represent images, speech, data, transmitted data, and compressed data, and biological and non-biological targets. The output signal can be the solution, or determined from the solution, to a system of equations with a Toeplitz or block Toeplitz coefficient matrix. The performance of the general signal processing device is dependent on the dimensions of the system of equations, and the speed at which the system of equations can be solved.

The performance of the above-mentioned devices is usually determined by the efficiency by which a system of equations with a Toeplitz, or block Toeplitz, coefficient matrix is solved. The prior art solution methods for a system of equations with a block Toeplitz coefficient matrix include iterative methods and direct methods. Iterative methods include methods from the conjugate gradient family of methods. Direct methods include Gauss elimination, and decomposition methods including Cholesky, LDU, eigenvalue, singular value, and QR decomposition. Direct methods obtain a solution in $O(n^3)$ flops.

Prior art solution methods exist for solving a system of equations with a Toeplitz coefficient matrix. These methods are extensively documented, so they will only be very briefly summarized here. These methods can generally be classified as being either direct or iterative methods, with the direct methods being further classified as classical, fast or super fast, depending on the number of steps required for a solution of the system of equations. The most popular iterative methods include methods from the conjugate gradient family of methods. Classical methods require $O(n^3)$ flops and include Gauss elimination and decomposition methods including eigenvalue, singular-value, LDU, QR, and Cholesky decomposition. The classical methods do not exploit the displacement structure of the matrices. Fast methods exploit the displacement structure of matrices and require $O(n^2)$ flops. Examples of fast methods include the Levinson type methods, and the Schur type methods. Super-fast methods are relatively new, and require $O(n \log^2 n)$ flops. Iterative methods can be stable, but can also be slow to converge for some systems. The classical methods are stable, but are slow. The fast methods are stable, and can be faster than the iterative methods. The super-fast methods have not been shown to be stable, and many are only asymptotically super-fast.

The following devices require the solution of a system of equations with a block Toeplitz, or Toeplitz, coefficient matrix for their operation. Sensing devices including radar, ladar and sonar devices as disclosed in Zrnic (6,448,923), Barnard (6,545,639), Davis (6,091,361), Pillai (2006/0114148), Yu (6,567,034), Vasilis (6,044,336), Garren (6,646,593), Dzakula (6,438,204), Sitton et al.(6,038,197), and Davis et al. (2006/0020401). Communications devices including echo cancellers, equalizers and devices for channel estimation, carrier frequency correction, mitigating intersymbol interference, and user detection as disclosed in Kung et al. (2003/0048861), Wu et al. (2007/0133814), Vollmer et al. (6,064,689), Kim et al. (2004/0141480), Misra et al. (2005/0281214), Shamsunder (2006/0018398), and Reznik et al. (2006/0034398). Imaging devices including MRI, CT, PET and ultrasound devices as disclosed in Johnson et al. (6,005,916), Chang et al. (2008/0107319), Zakhor et al. (4,982,162), and Liu (6,043,652). General signal processing devices including noise and vibration controllers as disclosed in Preuss (6,487,524), antenna beam forming systems as disclosed in Wu et al. (2006/0040706), and Kim et al. (2005/0271016), and image restorers as disclosed in Trimeche et al. (2006/0013479).

The prior art methods that are used to solve systems of equations in the above-indicated devices result in communications devices that have lower capacity, sensing and imaging devices with lower resolution and poor real time performance, control devices with slower response times, and general signal processing devices with lower performance. Devices using the prior art methods often have large power and heat dissipation requirements. The methods disclosed herein solve these and other problems by solving the systems of equations with a Toeplitz, or a block Toeplitz, coefficient matrix in the above-indicated devices with large increases in solution efficiency over the prior art methods. These increases in solution efficiency result in improved real time signal processing performance, increased capacity, improved tracking ability, and improved response times in the above-mentioned devices. The disclosed methods can also solve systems of equations with substantially larger dimensions than the methods in the prior art. This results in the disclosed devices having larger sensor arrays for improved resolution, and the disclosed devices being able to process larger amounts of past information. The power consumption, and heat dissipation, requirements of the disclosed devices are also reduced as a result of the large decrease in processing steps required by the disclosed methods. The disclosed methods also require less computer memory than the prior art methods. The methods can also be implemented on less costly computer hardware.

## BRIEF SUMMARY OF THE INVENTION

The performance of many signal processing devices is determined by the efficiency with which the devices can solve a system of equations with a Toeplitz or block Toeplitz coefficient matrix. This solution can be obtained with increased efficiency if the dimensions of the coefficient matrix and the system of equations are reduced. The disclosed device and method reduce the dimensions of a system of equations and its coefficient matrix. After the dimensions of the systems of equations are reduced, any methods known in the art can be used to obtain the solution with increased efficiency.

The solution to a system of equations with a Toeplitz or block Toeplitz coefficient matrix can be obtained by expanding the Toeplitz matrix, or the sub-blocks of the block Toeplitz matrix, to a circulant form. This expansion requires the addition of unknowns to the system of equations. If the initial system of equations is properly factored into a specific form, the original unknowns, and the additional unknowns can be efficiently determined.

## DRAWINGS

Fig. 1 shows the disclosed device as a component in a signal processing device.

Figs. 2(a) and 2(b) show sub-components for different embodiments of the disclosed device and methods.

## DETAILED DESCRIPTION

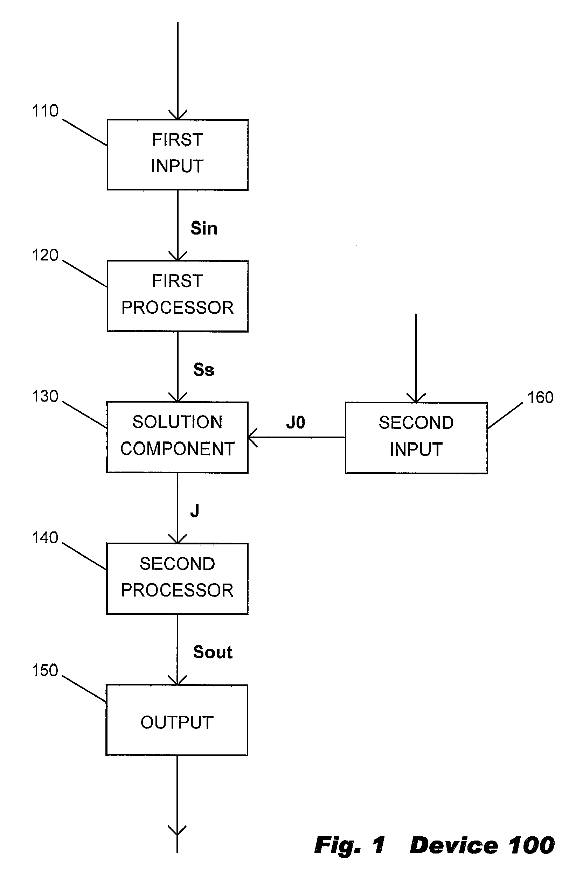

Fig. 1 is a non-limiting example of a signal processing device 100 that comprises a solution component 130 0 that determines signals J. A first input 110 is the source for at least one signal Sin that is processed at a first processor 120 that forms elements of a block Toeplitz, or Toeplitz, coefficient matrix To, and a vector $Y_0$, from the signals Sin. Signals Ss comprising elements of the matrix $T_0$ and the vector $Y_0$ are input to the solution component 130. A system of equations is formed and solved for the solution X by the solution component 130 disclosed in this application. The solution component 130 can processes signals $J_0$ from a second input 160 with the solution X. The output from the solution component 130 are signals J that are processed by a second processor 140 to form signals Sout for the output 150. Many devices do not have all of these components. Many devices have additional components. Devices can have feedback between components, including feedback from the second processor 140 to the first processor 120, or to the solution component 130. The signals from the second input 160 can be one or more of the signals Sin from the first input 110. The solution component 130 can output the solution X as the signals J without processing signals $J_0$. In this case, the second processor 140 can processes signals $J_0$ with the signals J, if required. The device 100 can be a communications device, a sensing device, an image device, a control device, or any general signal processing device known in the art. The following devices are non-limiting examples of devices that can be represented by the device 100. Most of the components of these devices are well known in the art.

As a non-limiting example, a sensing device can include active and passive radar, sonar, laser radar, acoustic flow meters, medical, and seismic devices. For these devices, the first input 110 is a sensor or a sensor array. The sensors can be acoustic transducers, optical and electromagnetic sensors. The first processor 120 can include, but is not limited to, a demodulator, decoder, digital filter, down converter, and a sampler. The first processor 120 usually calculates the elements of a coefficient matrix To from a matrix generated from signals Sin that represent sampled aperture data from one or more sensor arrays. The signals Sin and Ss can represent information concerning a physical object, including position, velocity, and the electrical characteristics of the physical object. If the array elements are equally spaced, the covariance matrix can be Hermetian Toeplitz or block Toeplitz. The known vector $Y_0$ can be a steering vector, a data vector or an arbitrary vector. The solution component 130 solves the system of equations for the signal weights X. The signal weights X can be applied to signals $J_0$ to form signals J that produce a beam pattern. The signals J and signal weights X can also contain information concerning the physical nature of a target. The signal weights can also be included as part of the signals J. The second processor 140 can further process the signals J to obtain signals Sout for the output 150, which can be a display device for target information, or a sensor array for a radiated signal.

As a non-limiting example, a communications device can include echo cancellers, equalizers, and devices for channel estimation, carrier frequency correction, speech encoding, mitigating intersymbol interference, and user detection. For these devices, the first input 110 usually includes either hardwire connections, or an antenna array. The first processor 120 can include, but is not limited to, an amplifier, a detector, receiver, demodulator, digital filters, and a sampler for processing a transmitted signal Sin. The first processor 120 usually calculates elements of a coefficient matrix $T_0$ from a covariance matrix generated from one of the input signals Sin. Signals Sin and Ss usually represent transmitted speech, image or data. The covariance matrix can be symmetric and Toeplitz or block Toeplitz. The known vector $Y_0$ is usually a cross-correlation vector between two of the transmitted signals Sin, representing speech, image or data. The solution component 130 solves the system of equations for the signal weights X, and combines the signal weights with signals $J_0$ from the second input 160 to form desired signals J that can also represent transmitted speech, images and data. The second processor 140 further processes the signals J for the output 150, which can be a hardwire connection, transducer, or display output. The signals from the second input 160 can be the same signals Sin as those from the first input 110.

As a non-limiting example, a control device can include a device that controls mechanical, chemical, biological and electrical components. Elements of a matrix $T_0$ and the vector $Y_0$ can be formed by a first processor 120 from signals Sin. Signals Sin and Ss represent a physical state of a controlled object. Signals Sin are usually collected by sensors 110. The solution component 130 calculates a weight vector X that can be used to generate control signals J from signals $J_0$. The signals $J_0$ are an input from a second input 160. The signals J are usually sent to an actuator or transducer 150 after further processing by a second processor 140. The physical state of the object can include performance data for a vehicle, medical information, vibration data, flow characteristics of a fluid or gas, measureable quantities of a chemical process, and motion, power, and heat flow data.

As a non-limiting example, an imaging device can include MRI, PET, CT, and ultrasound devices, synthetic aperture radars, fault inspection systems, sonograms, echocardiograms, and devices for acoustic, and geological, imaging. The first input component 110 is usually a sensor, or a sensor array. The sensors can be acoustic transducers, and optical, and electromagnetic, sensors that produce signals Sin from received energy. The first processor 120 can include, but is not limited to, a demodulator, decoder, digital filters, down converter, and a sampler. The first processor 120 can calculate elements of a coefficient matrix $T_0$ from a covariance matrix generated from signals Sin, or form a coefficient matrix from a known function, such as a Greene's function, whose elements are stored in memory. The covariance matrix can be Hermetian Toeplitz or block Toeplitz. The known vector $Y_0$ can be formed from a measured signal Sin, a data vector, or an arbitrary constant. Signals Ss comprise image information. The solution component 130 solves the system of equations for the unknown vector X. Vector X contains image information that is further processed by the second processor 140 to form an image Sout for display on an image display device 150. The signals J include the vector X as the output of the solution component 130.

As a non-limiting example of an imaging device, a MRI device, can comprise a first input 110 that includes a scanning system with an MRI scanner. The first processor 120 converts RF signals Sin to k-space data. The solution component 130 perform image reconstruction by transforming k-space data into image space data X by forming and solving a system of equations with a block Toeplitz coefficient matrix. The second processor 140 maps image space data X into optical data, and transforms optical data into signals Sout for the display 150. The matrix $T_0$ can be a Fourier operator that maps image space data to k-space data. The vector $Y_0$ is the measured k-space data. The vector X is image space data.

As a non-limiting example of an imaging device, an ultrasound device, can comprise acoustic receivers 110. The first processor 120 can comprise an amplifier, a phase detector, and an analog-to-digital converters. The first processor 120 forms signals Ss by calculating elements of a coefficient matrix $T_0$ from a Greene's function, and elements of a known vector $Y_0$ from sensed incident field energy. The solution component 130 calculates signal coefficients X that represent the conductivity and dielectric constant of a target object. The second processor 140 can comprise a transmit multiplexer, scan devices, an oscillator, and an amplifier. The output 150 can comprise acoustic transmitters, displays, printers, and storage.

As a non-limiting example, the device can be an array antenna system that includes an antenna array 110. The first processor 120 can include down-converters, demodulators, and channel selectors. The first processor 120 calculates elements in steering vectors $Y_0$, and elements in a covariance matrix $T_0$ formed from antenna aperture signals Sin. A solution component 130 calculates signal weights X, and multiplies signals $J_0$ for associated antenna elements by the signal weights X to obtain signals J. A second processor 140 further processes the signals J. The output 150 can be an antenna array, transducer, or display. The signals Ss represent transmitted information.

As a non-limiting example, the device 100 can be a filtering device. The first processor 120 calculates elements of the coefficient matrix $T_0$ and the vector $Y_0$ by autocorrelation and cross-correlation methods from sampled signals Sin. Signals Sin and Ss represent voice, images and data. The input 110 can be a hardwire connection or sensor. The solution component 130 calculates the vector X, which contains filter coefficients that are applied to signals $J_0$ from the second input 160 to produce desired signals J that represent voice, images and data. The device 100 may also provide feedback to improve the match between a desired signal, and a calculated approximation to the desired signals. The signals $J_0$ can be one or more of the signals Sin.

As a non-limiting example, the device 100 can be a device that relies on linear prediction, signal estimation, or data compression methods for its operation. The first processor 120 calculates elements of a coefficient matrix $T_0$ from an autocorrelation matrix formed from a sampled signal Sin. The vector $Y_0$ can also be calculated from sampled signals Sin, or the vector can have all zero values except for its first element. Signals Ss represent speech, images and data. The solution component 130 calculates the vector X, which usually contains prediction coefficients used to calculate signals J from signals $J_0$. The signals J represent predicted speech, images or data. The signals J may not be calculated if the vector X is the device output. In this case, the signal J includes the vector X which represents speech, images and data.

As a non-limiting example, the device 100 can be a device that relies on system identification, system modeling, or pattern recognition methods, for its operation. The first processor 120 calculates elements of a coefficient matrix $T_0$, usually from an autocorrelation matrix formed from a sampled signal Sin generated by the input 110. The elements of a vector $Y_0$ are usually calculated by a cross-correlation operation from sampled signals Sin generated by the input 110. Signals Ss represent speech, images, system characteristics, and data. The solution component 130 calculates a vector X containing coefficients that represent speech, images, system characteristics, or data. The solution component 130 may also generate signals J. The second processor 140 further processes the vector X, this processing includes comparing the vector X with other known vectors. The output 150 can indicate the results of these comparisons.

As a non-limiting example, the device 100 can be a general signal processing device for image processing and network routing. Elements of the coefficient matrix $T_0$ can be calculated from a known function. The vector $Y_0$ can be formed by the first processor 120 from sampled signals Sin generated by the input 110. The signals Sin and Ss can represent images and data. The solution component 130 calculates a vector X which can represent an image to be further processed by the second processor 140, and displayed by the output 150.

As a non-limiting example, the device 100 can be an artificial neural network with a Toeplitz synapse matrix. The first processor 120 calculates elements of the coefficient matrix $T_0$, and the vector $Y_0$, by autocorrelation and cross-correlation methods from training signals Sin applied to the input 110. The signals Sin and Ss usually represent speech, images and data. The solution component 130 calculates the vector X, which contains the synapse weights. The solution component 130 applies the synapse weights X to signals $J_0$ from the second input 160 to form signals J. The signals J can be further processed by the second processor 140. This processing includes applying a nonlinear function to the signals J, resulting in output signals Sout transmitted to a display device 150. The signals J represent speech, images and data processed by the linear portion of the artificial neural network. The signals $J_0$ represent an input to the device 100.

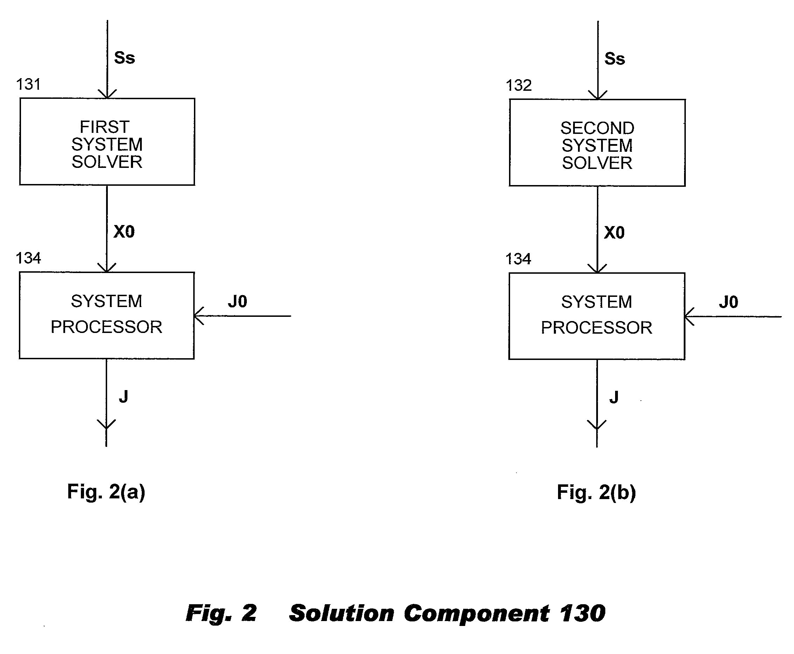

Figs. 2(a) and 2(b) disclose sub-components of a solution component 130 that solves a system of equations (1) with a Toeplitz or block Toeplitz coefficient matrix. Figs. 2(a) and 2(b) disclose a system processor 134 that forms signals J from the solution $X_0$. Usually, the elements of the coefficient matrix To, and elements of the vector $Y_0$, are input as signals Ss to the solution component 130. If the coefficient matrix $T_0$ remains constant for different vectors $Y_0$, either signals Ss can comprise elements of one or more coefficient matrices derived from the coefficient matrix To, or the solution component 130 can store the elements derived from the coefficient matrix $T_0$ in memory. The elements of the coefficient matrix To, the vectors X, $X_0$ and $Y_0$, and the signals J represent physical quantities, as disclosed above.

$$T_0 X_0 = Y_0 \qquad\qquad (1)$$

In the embodiment of the invention disclosed in Fig. 2(a), the first system solver 131 separates vectors $X_0$ and $Y_0$ of equation (1) into symmetric vectors $X_S(i)$ and $Y_S(i)$ that have elements i equal to elements (N-1-i), and into asymmetric vectors $X_A(i)$ and $Y_A(i)$, that have elements i equal to the negative of elements (N-1-i). The range of i is 0 to (N/2-1), inclusive. There are N elements in the vectors. IfN is odd, the range is 0 to (N-1)/2, inclusive. The Toeplitz matrix $T_0$ of equation (1) is separated into a skew-symmetric Toeplitz matrix $T_A$, and a symmetric Toeplitz matrix $T_S$. The original systems of equations can be factored into new systems of equations with symmetric and asymmetric vectors, and coefficient matrices that are either symmetric or skew-symmetric, or have sub-blocks that are either symmetric or skew-symmetric. The redundant elements in the vectors can be eliminated by folding the Toeplitz matrices back on themselves, and either adding or subtracting corresponding elements depending upon whether the vectors are symmetric or asymmetric, respectively. The result is a coefficient matrix that is the sum of a Toeplitz and a Hankel matrix. Half of the rows of this system of equations are redundant, and can be discarded by the first system solver 131. The following relationships can be used to factor the initial system of equations. The product of a symmetric Toeplitz matrix $T_S$, and a symmetric vector $X_S$, is a symmetric vector $Y_S$. The product of a symmetric matrix $T_S$, and an asymmetric vector $X_A$, is an asymmetric vector $Y_A$. The product of a skew-symmetric Toeplitz matrix $T_A$, and a symmetric vector $X_S$, is an asymmetric vector $Y_A$. The product of a skew-symmetric matrix $T_A$, and an asymmetric vector $X_A$, is a symmetric vector $Y_S$.

As a non-limiting example, the system of equations (1) is real, and the coefficient matrix $T_0$ is symmetric. The vectors are separated into symmetric vectors $X_S$ and $Y_S$, and asymmetric vectors $X_A$ and $Y_A$. The dimensions of the systems of equations (2) and (3) are then reduced to half by eliminating duplicate elements in the vectors. Two real systems of equations of half dimensions result that are solved by the first system solver 131 by any methods known in the art. If the initial system of equations is complex, and the coefficient matrix is Hermitian Toeplitz, two real systems of equations with the same dimensions as the initial system of equations are formed that are solved by the first system solver 131.

$$T_0 X_S = Y_S \qquad\qquad (2)$$

$$T_0 X_A = Y_A \qquad\qquad (3)$$

As a non-limiting example, the system of equations (1) has a block Toeplitz coefficient matrix and block vectors. The solution can be efficiently obtained by separating each sub-block of the coefficient matrix into symmetric and skew-symmetric sub-blocks, and by separating each sub-vector of the vectors $X_0$ and $Y_0$ into symmetric and asymmetric sub-vectors. The terms of the equations are factored to form multiple systems of equations with symmetric and asymmetric sub-vectors. The dimensions of the new systems of equations are then reduced by eliminating duplicate elements in the sub-vectors.

In an embodiment of the invention disclosed in Fig. 2(a), the first system solver 131 separates the sub-vectors of vectors $X_0$ and $Y_0$ to form symmetric vectors $X_S$ and $Y_S$ with symmetric sub-vectors $x_S(i)$ and $y_S(i)$ that have elements i equal to elements (N-1-i), and asymmetric vectors $X_A$ and $Y_A$ that have sub-vectors $x_A(i)$ and $y_A(i)$, that have elements i equal to the negative of elements (N-1-i). The range of i is 0 to (N/2-1), inclusive. The sub-vectors have N elements. If N is odd, the range is 0 to (N-1)/2, inclusive. The sub-blocks of the block Toeplitz matrix $T_0$ are separated into skew-symmetric Toeplitz sub-blocks $T_A$, and symmetric Toeplitz sub-blocks $T_S$. The systems of equations (1) can be factored into systems of equations with vectors having symmetric and asymmetric sub-vectors, and coefficient matrices comprising either symmetric or skew-symmetric sub-blocks. The first system solver 131 usually forms real systems of equations with smaller dimensions. The sub-blocks of the coefficient matrix of these systems of equation are no longer Toeplitz, but instead are the sum or difference of a Hankel and a Toeplitz matrix. Each new sub-block is formed by the first system solver 131 folding each Toeplitz sub-block back on itself, and either adding or subtracting corresponding elements depending on whether the sub-vectors are symmetric or asymmetric.

As a non-limiting example, the system of equations (1) has a real Toeplitz block Toeplitz coefficient matrix To. The coefficient matrix $T_0$ has $N_c$ symmetric sub-blocks per sub-block row and column. The $X_0$ and $Y_0$ vectors have $N_c$ sub-vectors. The matrix $T_0$ has dimensions (N x N), and the sub-blocks of $T_0$ have dimensions ($N_b$ x $N_b$).

$$T_0 = \begin{matrix} T_{00} & T_{01} & T_{02} \\ T_{01} & T_{00} & T_{01} \\ T_{02} & T_{01} & T_{00} \end{matrix}$$

The first system solver 131 separates each sub-vector into symmetric and asymmetric sub-vectors. Two systems of equations having the form of equations (2) and (3) result, one having symmetric vectors, and the other asymmetric vectors. The sub-vectors of vectors $X_A$ and $X_S$ have duplicate elements. The dimensions of each of the systems of equations are reduced by folding each of the sub-blocks in half, and either forming a sum or a difference of a Toeplitz matrix, and a Hankel matrix. The lower half of each sub-block is disregarded. This results in two systems of equations (4) and (5) with different coefficient matrices $T_A$ and $T_S$, having dimensions (N/2 x N/2). If the coefficient matrix is block Toeplitz, these two systems of equations can be solved by the first system solver 131 for $X_{S1}$ and $X_{A1}$, which are either the upper, or lower, half of the sub-vectors of vectors $X_S$ and $X_A$, respectively.

$$T_S X_{S1} = Y_S \qquad\qquad\qquad (4)$$

$$T_A X_{A1} = Y_A \qquad\qquad\qquad (5)$$

If the coefficient matrix $T_0$ is Toeplitz block Toeplitz, the first system solver 131 rearranges rows and columns in both coefficient matrices $T_A$ and $T_S$ to obtain two block Toeplitz rearranged matrices. These rearranged matrices have sub-blocks that are Toeplitz with dimensions ($N_c$ x $N_c$). The rows of the vectors in equations (4) and (5) are also rearranged. These rearranged vectors are then split into vectors with symmetric sub-vectors, and asymmetric sub-vectors. The sub-blocks in both rearranged matrices can be folded in half, with the resulting elements in each sub-block being either the sum or difference of a Toeplitz and a Hankel matrix. Each sub-block now has dimensions ($N_c$/2 x $N_c$/2). There are now four systems of equations. Each system of equations has a different coefficient matrix. The dimensions of each of the four systems of equations are (N/4 x N/4). The four systems of equations are solved by the first system solver 131 using any methods known in the art. The four solutions are combined to form the solution $X_0$ to system of equations (1).

In a nonlimiting example, the matrix $T_0$ of equation (1) is a complex Hermetian Toeplitz block Toeplitz matrix. The vectors $X_0$ and $Y_0$ are complex vectors. The system of equations can be multiplied out to form a real, and an imaginary, set of equations. These two sets of equations can both be further split into sets of equations with vectors that have symmetric and asymmetric sub-vectors. These four sets of equations can be combined into two sets of equations (6) and (7), with the same coefficient matrix having dimensions (2N x 2N). The sub-blocks have dimensions ($N_b$ x $N_b$). There are $2N_c$ sub-blocks in each row and column. The sub-block $T_{SR}$ is the real symmetric component of the matrix To. The sub-block $T_{AI}$ is the imaginary asymmetric component of the matrix To. The subscripts R, I, S, and A in equations (6) and (7) designate real, imaginary, symmetric, and asymmetric components, respectively.

$$T X_{01} = Y_{01} \qquad\qquad (6)$$

$$T = \begin{array}{cc} T_{SR} & -T_{AI} \\ T_{AI} & T_{SR} \end{array}$$

$$Y_{01} = \begin{array}{c} Y_{RS} \\ Y_{IA} \end{array}$$

$$X_{01} = \begin{array}{c} X_{RS} \\ X_{IA} \end{array}$$

$$T X_{02} = Y_{02} \qquad\qquad (7)$$

$$Y_{02} = \begin{array}{c} Y_{IS} \\ -Y_{RA} \end{array}$$

$$X_{02} = \begin{array}{c} X_{IS} \\ -X_{RA} \end{array}$$

Each quadrant of the matrix T has Toeplitz sub-blocks. The block vectors $X_{01}$, $X_{02}$, $Y_{01}$ and $Y_{02}$ have sub-vectors that contain duplicate elements which can be eliminated by folding each sub-block of the matrix T in half, reducing the dimensions of each sub-block to ($N_b/2$ x $N_b/2$), and forming coefficient matrix $T_1$. If the coefficient matrix $T_0$ is block Toeplitz, the first system solver 131 solves these two systems of equations with the same coefficient matrix for the elements in the vectors $X_{01}$ and $X_{02}$. These vectors are then combined to determine the vector $X_0$.

For a Toeplitz block Toeplitz coefficient matrix To, the rows and columns of the coefficient matrix $T_1$ can be rearranged within each quadrant to form a block Toeplitz coefficient matrix $T_2$. The block vectors are also rearranged, and these rearranged block vectors from both systems of equations can be split into symmetric block vectors $X_{11S}$, $X_{12S}$, $Y_{11S}$, and $Y_{12S}$, and asymmetric block vectors $X_{11A}$, $X_{12A}$, $Y_{11A}$ and $Y_{12A}$, each with duplicated elements. Each sub-block of the matrix $T_2$ can be folded to half dimensions, eliminating the duplicate vector elements. The result is four systems of equations with two different coefficient matrices $T_{2S}$ and $T_{2A}$, of dimensions (N/2 x N/2). The four systems of equations can each be solved by the first system solver 131 for the elements in the four block vectors $X_{11S}$, $X_{11A}$, $X_{12S}$, and $X_{12A}$. These vectors are then combined to determine the solution $X_0$.

In an embodiment of the invention disclosed in Fig. 2(b), a system of equations (1) is factored into one or more systems of equations, each having a coefficient matrix comprising one or more Toeplitz sub-blocks. The system of equations (1) can be real or complex, and coefficient matrix $T_0$ can be Toeplitz or block Toeplitz. The factored systems of equations are real with each of the sub-blocks of the coefficient matrices of the factored systems of equations being either symmetric or skew-symmetric. The factored systems of equations have dimensions (N x N). The sub-blocks in each of the coefficient matrices of the factored systems of equations can be expanded to form circulant sub-blocks in a matrix C with the addition of N/2, or approximately N/2 unknown elements contained in a vector S. The vectors $Y_0$ and $X_0$ are expanded with zero pad rows, usually at the beginning and end of each sub-vector, and separated into either symmetric or skew-symmetric vectors. The vectors X and Y can also be formed by adding zero pad rows to symmetric or skew-symmetric vectors. The vectors X and Y have one or more sub-vectors. For the embodiment of Fig. 2(b), a symmetric sub-vector is defined as a sub-vector having a Fourier transform that is real, and a skew-symmetric sub-vector is defined as a sub-vector having a Fourier transform that is imaginary.

In an embodiment of the invention disclosed in Fig. 2(b), the method can be applied to a system of equations with vectors that are either symmetric or asymmetric, as defined above. The vectors X and Y are formed by zero padding the symmetric and asymmetric vectors. The one or more symmetric or skew-symmetric Toeplitz sub-blocks of the coefficient matrix of this system of equations are expanded to a circulant form.

Equation (8) can be used to determine the new diagonal elements of the sub-blocks of matrix C. For equation (8), the dimensions of the sub-blocks of matrix C are (N x N). The second system solver 132 of Fig. 2(b) calculates the vectors S and X of equation (9) by any methods known in the art, including methods that apply a Fourier transform to the system of equations.

In the non-limiting example of a real system of equations with a symmetric Toeplitz coefficient matrix, the calculations have complexity of O $(N/2)^3$ flops. The dimensions of the initial system of equations are (N x N). The dimensions of the systems of equations (9) and the matrix C are approximately (2N x 2N). The vectors X and Y have zero pad elements, usually at the beginning and end of the vectors, that correspond to pad rows and columns used to create the circulant matrix C from the symmetric Toeplitz coefficient matrix.

$$T(j)(N-1-i) = T(1+i)(j) \qquad (8)$$

$$T(N-1-i)(j) = T(j)(1+i)$$

$$C\,X \;=\; Y + A\,S \qquad (9)$$

For a complex system of equations, the vector S can include as many as 2N unknowns. The original system of equations is usually not in the proper form for the application of this method. For these cases, the system of equations can be factored as disclosed above into a form with symmetric and asymmetric vectors, or skew-symmetric and symmetric vectors, and symmetric and skew-symmetric Toeplitz sub-blocks. Once the vectors and coefficient matrices are in this form, the method can be applied.

In a non-limiting example, a system of equations with a block Toeplitz coefficient matrix that has either symmetric or skew-symmetric sub-blocks, and vectors that have sub-vectors that are either symmetric or asymmetric, as defined above, or that have sub-vectors that are either symmetric or skew-symmetric, as defined above, can have its dimensions increased such that a block circulant coefficient matrix is formed from the block Toeplitz coefficient matrix. This requires that pad rows and columns be added to the system of equations, usually surrounding each sub-block. The dimensions of the factored system of equations are usually doubled, or approximately doubled, with the introduction of approximately N/2 additional unknowns to the system of equations. If the dimensions of the factored system of equations are (N x N), the matrix A usually includes N/2 columns with all zero values except for one or two nonzero elements in each column. The columns usually have 2N elements. To determine the values of S, a system of equations usually with dimensions (N/2 x N/2) must be solved. The circulant sub-blocks can be Fourier transformed to diagonal sub-blocks. The rows and columns of the coefficient matrix are rearranged to form a coefficient matrix with nonzero sub-blocks only on the principal diagonal. This system of equations is solved by the second system solver 132 to obtain an equation of the form of equation (10). Equation (11) can be used to determine the vector S. Equation (11) is formed from pad rows of equation (10). These rows have zero values for the vector Y. Equation (10) can be used to calculate the vector X once the vector S is known.

In a non-limiting example, the initial system of equations has a real symmetric or complex Hermitian Toeplitz block Toeplitz coefficient matrix. The above-indicated methods can be used by the second system solver 132 to form systems of equations with coefficient matrices having symmetric sub-blocks, and vectors with sub-vectors that are either symmetric or asymmetric, or symmetric or skew-symmetric, depending on the method. The above-mentioned methods include rearranging rows and columns in the systems of equations. Each sub-block of the coefficient matrix is expanded to a circulant form. The expanded system of equations is transformed, rearranged, and solved for vectors S and X.

Once the systems of equations are placed in a form with a circulant coefficient matrix, or a form with reduced dimensions, they can be solved by any methods known in the art. These methods comprise classical methods including Gauss elimination, iterative methods including any of the conjugate gradient methods, and decomposition methods, including eigenvalue, singular value, LDU, QR, and Cholesky decomposition. Each of the solved systems of equations have the form of equation (10). In equation (10), the term $X_y$ is the product of the inverse of any coefficient matrix disclosed above, and a vector Y. The coefficient matrix may have been circulant, or of dimensions smaller than the initial coefficient matrix. The vector Y may have been a rearranged vector. The matrix $X_A$ is the product of an inverse coefficient matrix, and any of the matrices A disclosed above. The vectors X and S are unknown vectors. The matrix $X_A$ is usually not required for the embodiment of Fig. 2(a). For the embodiment of Fig. 2(b), the matrix $X_A$ is determined from pad columns used to form a circulant coefficient matrix. The solution from each of the solved systems of equations is combined to form a solution for equation (1). For the pad rows and columns of the embodiments of Fig. 2(b), the vector $S_p$ can be determined by equation (11).

$$X = X_y + X_A S \qquad\qquad (10)$$

$$S_p = - X_{Ap}^{-1} X_y \qquad\qquad (11)$$

For a coefficient matrix with a Toeplitz block Toeplitz structure, a different embodiment of the disclosed invention can be used for each Toeplitz level present in the coefficient matrix. The disclosed methods can also be applied to any Toeplitz sub-blocks.

The system processor 134 calculates signals J from the solution $X_0$. Calculating the signals J can require both the solution $X_0$ and the signals $J_0$. Signals J can be calculated by any known method in the art, including calculating a sum of products comprising elements of the vector $X_0$ and the signals $J_0$. For some devices, there are no signals $J_0$. In these cases, the signals J comprise the vector $X_0$, or may actually be the vector $X_0$. If the vector $X_0$ and the signals J are both outputs of the solution component 130, the signals J also comprise the vector $X_0$. Both signals J and $J_0$ can be a plurality of signals, a single signal, a digital signal, or an analog signal.

The choice of hardware architecture depends on the performance, cost and power constraints of the particular device 100 on which the methods are implemented. Both methods separate a given system of equations into multiple systems of equations of reduced dimensions. In a parallel processing architecture, each of the systems of equations can be solved on a separate processor without interprocessor communications or memory transfers. This separate processing reduces processor waiting time, time delays, and the need for coordination of calculations, memory and local processor cache memory. In a single processor architecture, the numerous systems of equations can be processed sequentially with fewer memory transfers, and with each solution requiring less memory. In many cases, the solution can be obtained using only cache memory, and avoid frequent accesses to main memory.

The methods disclosed in the embodiment of Fig. 2(a) are not limited to systems of equations having Toeplitz and block Toeplitz coefficient matrices, they can be applied to any system of equations having a coefficient matrix that has rows with elements whose order are reversed with respect to the order of elements in another row of the coefficient matrix. They can also be applied to any system of equations having a coefficient matrix that comprises sub-blocks having rows with elements whose order are either reversed with respect to the order of elements in another row of the sub-block, or reversed with respect to the order of the negative of elements in another row of the sub-block. The vectors of the system of equation can be separated into the sum of a symmetric vector, and a vector that has elements that are the negative of other elements in the vector. To eliminate the duplicate magnitudes in the vectors, the dimensions of the coefficient matrices are reduced. This reduction increases the solution efficiency at the expense of forming another systems of equations.

The disclosed methods can be efficiently implemented on circuits that are part of computer architectures that include, but are not limited to, a digital signal processor, a general microprocessor, an application specific integrated circuit, a field programmable gate array, and a central processing unit. These computer architectures are part of devices that require the solution of a system of equations with a coefficient matrix for their operation. The present invention may be embodied in the form of computer code implemented in tangible media such has floppy disks, read-only memory, compact disks, hard drives or other computer readable storage medium, wherein when the computer program code is loaded into, and executed by, a computer processor, where the computer processor becomes an apparatus for practicing the invention. When implemented on a computer processor, the computer program code segments configure the processor to create specific logic circuits.

The present invention is not intended to be limited to the details shown. Various modifications may be made in the details without departing from the scope of the invention. Other terms with the same or similar meaning to terms used in this disclosure can be used in place of those terms. The number and arrangement of the disclosed components can be varied. Different components of the device 100 and the solution component 130 can be combined, or separated into multiple components. All of the components of the device 100 can be combined into a single component. All of the sub-components of the solution component 130 can be combined into a single component. Sub-components of the solution component 130 can be combined with components of the device 100. The solution component 130 can comprise one, or both, of the first system solver and the second system solver.

**Claims**

1.  A device comprising digital circuits for processing digital signals, said device further comprising:

    at least one of an antenna, sensors, a transducer, a keypad, and a hardwire connection for generating signals Sin;
    a first processor for calculating signals Ss from said signals Sin, wherein said signals Ss comprise elements of a coefficient matrix $T_0$ and elements of a vector $Y_0$;
    a solution component for calculating signals J, wherein said signals Ss, and said signals J represent at least one of transmitted speech, images and data, wherein
    said solution component comprises:

    a first system solver, wherein said first system solver:

    separates said vector $Y_0$ into at least one symmetric vector $Y_S$ and at least one asymmetric vector $Y_A$, wherein:

    each of said at least one symmetric vector $Y_S$ comprises one or more symmetric sub-vectors, wherein said one or more symmetric sub-vectors comprises N elements, wherein element i equals element (N-1-i) for (i ≥ 0),
    each of said at least one asymmetric vector $Y_A$ comprises one or more asymmetric sub-vectors, wherein said one or more asymmetric sub-vectors comprises N elements, wherein element i equals a negative of element (N-1-i) for (i ≥ 0);

    forms first vectors comprising elements of at least one of said at least one symmetric vector $Y_S$ and said at least one asymmetric vector $Y_A$;
    forms one or more first coefficient matrices, wherein:

    each of said one or more first coefficient matrices comprises one or more sub-blocks,
    each of said one or more sub-blocks comprises elements calculated by at least one of:

    adding or subtracting elements from different columns in one of one or more symmetric Toeplitz sub-blocks, and
    adding or subtracting elements from different columns in one of one or more skew-symmetric Toeplitz sub-blocks, and
    said one or more symmetric Toeplitz sub-blocks, and said one or more skew-symmetric Toeplitz sub-blocks, are obtained from said coefficient matrix $T_0$;

    solves systems of equations to determine second vectors,
    wherein each of said systems of equations comprises:

    one of said one or more first coefficient matrices,
    one of said first vectors, and
    one of said second vectors;

    calculates a solution $X_0$ from said second vectors, wherein said solution $X_0$ comprises signal weights for at least one of channel equalization, echo cancellation, digital filtering, linear prediction, beamforming and noise cancellation; and

a system processor, wherein said system processor calculates said signals J from signals $J_0$ and said solution $X_0$.

2. The device as recited in Claim 1, wherein:

said first vectors are formed by eliminating redundant elements of said at least one symmetric vector $Y_S$ and said at least one asymmetric vector $Y_A$;
said coefficient matrix $T_0$ is a covariance matrix; and
said solution component further comprises at least one parallel computer architecture.

3. The device as recited in Claim 2, wherein said one or more symmetric Toeplitz sub-blocks and said one or more skew-symmetric Toeplitz sub-blocks are formed by separating said coefficient matrix $T_0$ into at least one of:

one or more real symmetric sub-blocks,
one or more real skew-symmetric sub-blocks,
one or more imaginary symmetric sub-blocks, and
one or more imaginary skew-symmetric sub-blocks.

4. The device as recited in Claim 3, wherein
said one or more symmetric Toeplitz sub-blocks, and said one or more skew-symmetric Toeplitz sub-blocks, comprise rows; and
wherein said one or more sub-blocks is formed by:

disregarding half of said rows; and
folding each of said one or more symmetric Toeplitz sub-blocks and said one or more skew-symmetric Toeplitz sub-blocks back on itself and either adding or subtracting corresponding elements.

5. The device as recited in Claim 1, wherein:

said device comprises a receiver, wherein said receiver detects user data in a multiple-user system; and
said solution $X_0$ comprises said user data.

6. A method for filtering digital signals by a device comprising digital circuits, wherein said device is one of an equalizer, an echo canceller, a beamformer, a digital filter and a noise canceller, said device further comprising hardware connections for input of signals Sin to said device, and hardware connections for output of signals J from said device; said method comprising the steps of:

calculating signals Ss from said signals Sin, wherein said signals Ss comprise elements of a covariance matrix $T_0$ and elements of a vector $Y_0$ ;
separating said vector $Y_0$ into at least one symmetric vector $Y_S$ and at least one asymmetric vector $Y_A$, wherein:

each of said at least one symmetric vector $Y_S$ comprises one or more symmetric sub-vectors, wherein said one or more symmetric sub-vectors comprises N elements, wherein element i equals element (N-1-i) for (i $\geq$ 0),
each of said at least one asymmetric vector $Y_A$ comprises one or more asymmetric sub-vectors, wherein said one or more asymmetric sub-vectors comprises N elements, wherein element i equals a negative of element (N-1-i) for (i $\geq$ 0), and
said N may have a different value for each of said one or more symmetric sub-vectors and said one or more asymmetric sub-vectors;

forming first vectors comprising elements from at least one of said at least one symmetric vector $Y_S$ and said at least one asymmetric vector $Y_A$;
forming one or more first coefficient matrices, wherein:

each of said one or more first coefficient matrices comprises one or more first sub-blocks,
each of said one or more first sub-blocks is formed by folding one of one or more second sub-blocks back on itself, and adding or subtracting elements from column i and column (N-1-i) for (i $\geq$ 0),
each of said one or more second sub-blocks comprises N columns, wherein a value of said N may be different for each of said one or more second sub-blocks,
each of said one or more second sub-blocks comprises either:

rows with elements in a reverse order to elements in another row, or
rows with elements that are negative of, and in a reverse order to, elements in another row, and
said one or more second sub-blocks are obtained from said covariance matrix $T_0$;

solving systems of equations to determine second vectors, wherein each of said systems of equations comprises one of said one or more first coefficient matrices,
one of said first vectors, and
one of said second vectors;
calculating a weight vector $X_0$ from said second vectors; and
calculating said signals J from signals $J_0$ and said weight vector $X_0$, wherein said signals Ss and said signals J represent at least one of transmitted speech, images and data.

7. The method for filtering digital signals as recited in Claim 6, wherein:

said first vectors are formed by eliminating duplicate elements of said at least one symmetric vector $Y_S$ and said at least one asymmetric vector $Y_A$;
said device comprises parallel computer architectures; and
said one or more first sub-blocks are formed by disregarding half, or approximately half, of each of said one or more second sub-blocks.

8. The method for filtering digital signals as recited in Claim 7, wherein said one or more second sub-blocks are formed by separating said coefficient matrix $T_0$ into at least one of:

one or more real sub-blocks, each comprising rows with elements in a reverse order to elements in another row;
one or more imaginary sub-blocks, each comprising rows with elements in a reverse order to elements in another row;
one or more real sub-blocks, each comprising rows with elements that have a negative value, and a reverse order, to elements in another row; and
one or more imaginary sub-blocks, each comprising rows with elements that have a negative value, and a reverse order, to elements in another row.

9. The method for filtering digital signals as recited in Claim 8, wherein said first vectors are formed by disregarding half, or approximately half, of the elements of said at least one symmetric vector $Y_S$ and said at least one asymmetric vector $Y_A$.

10. The method for filtering digital signals as recited in Claim 9, wherein said device estimates channel characteristics.

11. A device comprising digital circuits for filtering signals, wherein said device is one of an equalizer, an echo canceller, a digital filter, a beamformer and a noise canceller, said device further comprising:

at least one hardwire connection for generating signals Sin and signals $J_0$;
a system processor, wherein said system processor calculates signals J from said signals $J_0$ and signal weights $X_0$;
an output component for said signals J, wherein said output component comprises at least one of a display, a transducer and said at least one hardwire connection;
a first processor, wherein said first processor calculates signals Ss from said signals Sin, wherein said signals Ss comprise elements of a coefficient matrix $T_0$ and of a vector $Y_0$; and
a third system solver, wherein said third system solver:

separates said vector $Y_0$ into one or more first vectors, and one or more second vectors, wherein:

each of said one or more first vectors comprises one or more first sub-vectors comprising first elements, wherein half, or approximately half, of said first elements are equal, and
each of said one or more second vectors comprises one or more second sub-vectors comprising second elements, wherein half, or approximately half, of said second elements are equal to a negative of other elements;

forms one or more coefficient matrices C, wherein each of said one or more coefficient matrices C comprises one or more sub-blocks, wherein said one or more sub-blocks comprises elements calculated from said coefficient matrix $T_0$ by separating said coefficient matrix $T_0$ into at least one of:

one or more real symmetric sub-blocks,
one or more real skew-symmetric sub-blocks,
one or more imaginary symmetric sub-blocks, and
one or more imaginary skew-symmetric sub-blocks;

and by adding pad rows and pad columns to said at least one of:

one or more real symmetric sub-blocks,
one or more real skew-symmetric sub-blocks,
one or more imaginary symmetric sub-blocks, and
one or more imaginary skew-symmetric sub-blocks,

to form circulant sub-blocks;
forms one or more vectors Y, wherein each of said one or more vectors Y comprises:

zero pad elements, and
elements of at least one of said one or more first vectors, and said one or more second vectors;

solves systems of equations, C X = Y + A S, for said one or more vectors X, wherein one or more matrices A comprises fixed elements corresponding to pad rows, and one or more vectors S comprises unknown elements calculated from equations, $S = - X_{Ap}^{-1} X_y$ , formed by solving said systems of equations; and calculates said signal weights $X_0$ from said one or more vectors X.

12. The device as recited in Claim 11, wherein said device further comprises parallel computer architectures for calculating said one or more vectors X.

13. The device as recited in Claim 11, wherein:

each of said one or more first sub-vectors comprises N elements, wherein element i equals element (N-i) for (i $\geq$ 1), and
each of said one or more second sub-vectors comprises N elements, wherein element i equals a negative of element (N-i) for (i $\geq$ 1).

14. The device as recited in Claim 12, wherein:

each of said one or more first sub-vectors comprises N elements, wherein element i equals element (N-1-i) for (i $\geq$ 0), and
each of said one or more second sub-vectors comprises N elements, wherein element i equals a negative of element (N-1-i) for (i $\geq$ 0).

15. The device as recited in Claim 11, wherein:

said one or more vectors $X_y$ is formed from a pad row portion of one or more products $C^{-1}$ Y; and
said one or more matrices $X_{Ap}^{-1}$ is calculated from a pad row portion of one or more products $C^{-1}$ A.

110 ⟍ ┌─────────────┐
     │   FIRST     │
     │   INPUT     │
     └─────────────┘
            │
            │ **Sin**
            ▼
120 ⟍ ┌─────────────┐
     │   FIRST      │
     │ PROCESSOR    │
     └─────────────┘
            │
            │ **Ss**
            ▼
130 ⟍ ┌─────────────┐      **J0**      ┌─────────────┐ ⟍ 160
     │  SOLUTION   │ ◄───────────────  │   SECOND    │
     │ COMPONENT   │                   │   INPUT     │
     └─────────────┘                   └─────────────┘
            │
            │ **J**
            ▼
140 ⟍ ┌─────────────┐
     │   SECOND     │
     │ PROCESSOR    │
     └─────────────┘
            │
            │ **Sout**
            ▼
150 ⟍ ┌─────────────┐
     │   OUTPUT    │
     └─────────────┘
            │
            ▼

*Fig. 1   Device 100*

EP 2 273 382 A2

**Ss**

**131**

```
FIRST
SYSTEM
SOLVER
```

**X0**

**134**

```
SYSTEM
PROCESSOR
```
**J0**

**J**

**Fig. 2(a)**

**Ss**

**132**

```
SECOND
SYSTEM
SOLVER
```

**X0**

**134**

```
SYSTEM
PROCESSOR
```
**J0**

**J**

**Fig. 2(b)**

*Fig. 2    Solution Component 130*

# EP 2 273 382 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 12459596 B
- WO 6448923 A, Zrnic
- WO 6545639 A, Barnard
- WO 6091361 A, Davis
- WO 20060114148 A, Pillai
- WO 6567034 A, Yu
- WO 6044336 A, Vasilis
- WO 6646593 A, Garren
- WO 6438204 A, Dzakula
- WO 6038197 A, Sitton
- WO 20060020401 A, Davis
- WO 20030048861 A, Kung
- WO 20070133814 A, Wu
- WO 6064689 A, Vollmer
- WO 20040141480 A, Kim
- WO 20050281214 A, Misra
- WO 20060018398 A, Shamsunder
- WO 20060034398 A, Reznik
- WO 6005916 A, Johnson
- WO 20080107319 A, Chang
- WO 4982162 A, Zakhor
- WO 6043652 A, Liu
- WO 6487524 A, Preuss
- WO 20060040706 A, Wu
- WO 20050271016 A, Kim
- WO 20060013479 A, Trimeche